# EUROPÄISCHE PATENTSCHRIFT

(11) **EP 3 423 323 B1**
(45) Veröffentlichungstag und Bekanntmachung des Hinweises auf die Patenterteilung: **30.11.2022**
(21) Anmeldenummer: 17708456.3
(22) Anmeldetag: 28.02.2017
(51) Int. Cl.: B60W 30/08, B60W 30/09, B60W 30/06, B60W 30/095

(54) **VERFAHREN ZUM MANÖVRIEREN EINES KRAFTFAHRZEUGS MIT BESTIMMUNG EINES RESTWEGS ZUR BREMSANSTEUERUNG, STEUEREINRICHTUNG, FAHRERASSISTENZSYSTEM SOWIE KRAFTFAHRZEUG**
METHOD FOR MANEUVERING A MOTOR VEHICLE COMPRISING DETERMINATION OF A REMAINING DISTANCE UNTIL BRAKE ACTIVATION, CONTROL DEVICE, DRIVER ASSISTANCE SYSTEM, AND MOTOR VEHICLE
PROCÉDÉ DE MAN UVRE D'UN VÉHICULE À MOTEUR PERMETTANT DE DÉTERMINER UN TRAJET RESTANT POUR COMMANDER LE FREINAGE, DISPOSITIF DE COMMANDE, SYSTÈME D'AIDE À LA CONDUITE ET VÉHICULE

(30) Priorität: 01.03.2016 DE 102016103673
(43) Veröffentlichungstag der Anmeldung: 09.01.2019
(73) Patentinhaber: Valeo Schalter und Sensoren GmbH, 74321 Bietigheim-Bissingen (DE)
(72) Erfinder: SATTLER, Stefanie, 74321 Bietigheim-Bissingen (DE); LUECKER, Steffen, 74321 Bietigheim-Bissingen (DE); JOOS, Malte, 74321 Bietigheim-Bissingen (DE); BARIANT, Jean-Francois, 74321 Bietigheim-Bissingen (DE); BLINKLE, Frank, 74321 Bietigheim-Bissingen (DE)
(74) Vertreter: Pothmann, Karsten
(86) Internationale Anmeldenummer: PCT/EP2017/054551
(87) Internationale Veröffentlichungsnummer: WO 2017/148884

(56) Entgegenhaltungen:
- DE-A1-102010 020 206
- DE-A1-102014 111 122

## Beschreibung

Die vorliegende Erfindung betrifft ein Verfahren zum Manövrieren eines Kraftfahrzeugs, bei welchem eine Trajektorie zum Manövrieren des Kraftfahrzeugs bestimmt wird, während des Manövrierens des Kraftfahrzeugs entlang der Trajektorie ein Hinweisabstand, welcher einen Abstand zu einem Wendepunkt der Trajektorie beschreibt, und ein Kollisionsabstand, welcher einen Abstand zu einem Objekt in einer Umgebung des Kraftfahrzeugs beschreibt, bestimmt werden und anhand des Hinweisabstands und des Kollisionsabstands ein Restweg bis zum Ansteuern eines Bremssystems des Kraftfahrzeugs bestimmt wird. Darüber hinaus betritt die vorliegende Erfindung eine Steuereinrichtung für ein Fahrerassistenzsystem sowie ein Fahrerassistenzsystem für ein Kraftfahrzeug. Schließlich betrifft die vorliegende Erfindung ein Kraftfahrzeug mit einem solchen Fahrerassistenzsystem.

Aus dem Stand der Technik sind unterschiedliche Verfahren bekannt, welche zum Manövrieren eines Kraftfahrzeugs genutzt werden. Dabei kann das Kraftfahrzeug beispielsweise semi-autonom manövriert werden. In diesem Fall wird das Kraftfahrzeug entlang einer vorbestimmten Trajektorie mit Hilfe des Fahrerassistenzsystems bewegt, wobei das Fahrerassistenzsystem in eine Lenkung des Kraftfahrzeugs eingreift. Der Fahrer betätigt weiterhin die Bremse und das Gaspedal. Weiterhin sind Verfahren bekannt, bei welchen das Kraftfahrzeug autonom beziehungsweise vollautonom manövriert wird. In diesem Fall greift das Fahrerassistenzsystem auch in einen Antriebsmotor und das Bremssystem des Kraftfahrzeugs ein.

Um während des Manövrierens des Kraftfahrzeugs die Bremsung des Kraftfahrzeugs zu regeln, wird häufig ein sogenanntes Restweg-Interface verwendet. Dieses gibt die zu fahrende Distanz beziehungsweise einen Restweg aus und das Bremssystem des Kraftfahrzeugs übernimmt dann die Regelung und damit die Umsetzung der Bremsung. Im Normalfall wird der Restweg auf Grundlage eines Hinweisabstands, welcher einen Abstand zu einem Wendepunkt der Trajektorie beziehungsweise der geplanten Bahn beschreibt. Dieser Hinweisabstand wird auch als Distance To Hint (DTH) bezeichnet. Darüber hinaus kann ein Kollisionsabstand bestimmt werden, welcher einen Abstand zu einem Objekt in der Umgebung des Kraftfahrzeugs beschreibt. Dieser Kollisionsabstand kann auch als Distance To Collision (DTC) bezeichnet werden. Der Nachteil hierbei ist, dass der Restweg einen sehr schwankenden Verlauf aufweisen kann und somit eine unruhige Bremsung hervorgerufen wird. Dies liegt zum einen daran, dass zwischen dem Hinweisabstand und dem Kollisionsabstand nach minimaler Distanz hin und her geschaltet wird. Auch kann der Kollisionsabstand zeitliche Änderungen aufweisen, da dieser in Abhängigkeit von der aktuellen Trajektorie beziehungsweise einem aktuellen Fahrschlauch und der Stabilität der Objekte, die mit Hilfe von Sensoren erkannt werden, bestimmt wird.

Bekannte Verfahren zum Manövrieren eines Kraftfahrzeugs sind in DE 10 2014 111 122 A1 und DE 10 2010 020 206 A1 beschrieben.

Es ist Aufgabe der vorliegenden Erfindung, eine Lösung aufzuzeigen, wie ein Restweg bis zur Ansteuerung eines Bremssystems des Kraftfahrzeugs während eines Manövrierens des Kraftfahrzeugs zuverlässiger bestimmt werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß des uoführungoform erfindungsgemäßen Verfahrens zum Manövrieren eines Kraftfahrzeugs wird eine Trajektorie zum Manövrieren des Kraftfahrzeugs bestimmt. Während des Manövrierens des Kraftfahrzeugs entlang der Trajektorie wird ein Hinweisabstand, welcher einen Abstand zu einem Wendepunkt der Trajektorie beschreibt, und ein Kollisionsabstand, welcher einen Abstand zu einem Objekt in einer Umgebung des Kraftfahrzeugs beschreibt, bestimmt. Ferner wird anhand des Hinweisabstands und des Kollisionsabstands ein Restweg bis zum Ansteuern eines Bremssystems bestimmt. Des Weiteren wird anhand von Änderungen in dem zeitlichen Verlauf des Hinweisabstands fortlaufend ein korrigierter Hinweisabstand bestimmt. Des Weiteren wird anhand von Anderungen in den zeitlichen Verlauf des Kollisionsabstands fortlaufend ein korrigierter Kollisionsabstand bestimmt.

Ferner wird der Restweg anhand des korrigierten Hinweisabstands und des korrigierten Kollisionsabstands bestimmt.

Ein erfindungsgemäßes Verfahren dient zum Manövrieren eines Kraftfahrzeugs. Hierbei wird eine Trajektorie zum Manövrieren des Kraftfahrzeugs bestimmt. Während des Manövrierens des Kraftfahrzeugs entlang der Trajektorie werden ein Hinweisabstand, welcher einen Abstand zu einem Wendepunkt der Trajektorie beschreibt, und ein Kollisionsabstand, welcher einen Abstand zu einem Objekt in einer Umgebung des Kraftfahrzeugs beschreibt, bestimmt. Anhand des Hinweisabstands und des Kollisionsabstands wird dann ein Restweg bis zum Ansteuern eines Bremssystems des Kraftfahrzeugs bestimmt. Darüber hinaus wird anhand von Änderungen in dem zeitlichen Verlauf des Hinweisabstands fortlaufend ein korrigierter Hinweisabstand bestimmt und anhand von Änderungen in dem zeitlichen Verlauf des Kollisionsabstands wird fortlaufend ein korrigierter Kollisionsabstand bestimmt. Der Restweg wird dann anhand des korrigierten Hinweisabstands und des korrigierten Kollisionsabstands bestimmt.

Mit Hilfe des Verfahrens soll das Fahrzeug manövriert werden, um den Fahrer des Kraftfahrzeugs zu unterstützen. Dabei ist es insbesondere vorgesehen, dass das Kraftfahrzeug autonom manövriert wird. Beispielsweise kann das Kraftfahrzeug mit Hilfe des Verfahrens autonom in eine Parklücke eingeparkt werden. Die Parklücke kann anhand von Objekten erkannt werden, welche die Parklücke begrenzen. Die Parklücke kann auch anhand von Fahrbahnmarkierungen erkannt werden. Zunächst wird eine Trajektorie zum Manövrieren des Kraftfahrzeugs bestimmt. Die Trajektorie beschreibt eine Bahn beziehungsweise einen Fahrschlauch für die zukünftige Bewegung des Kraftfahrzeugs. Dabei kann die Trajektorie so bestimmt werden, dass diese einen oder mehrere Wendepunkte aufweist. Bei einem Wendepunkt kann beispielsweise die Fahrtrichtung des Kraftfahrzeugs geändert werden. Bei einem Wendepunkt kann in die Lenkung des Kraftfahrzeugs eingegriffen werden.

Darüber hinaus wird überprüft, ob sich zumindest ein Objekt beziehungsweise Hindernis in der Umgebung des Kraftfahrzeugs befindet. Das Kraftfahrzeug beziehungsweise das Fahrerassistenzsystem können mehrere Sensoren aufweisen, die verteilt an dem Kraftfahrzeug angeordnet sind. Bei den Sensoren kann es sich beispielsweise um Ultraschallsensoren, Radarsensoren, Laserscanner, Lidar-Sensoren oder Kameras handeln. Mit Hilfe der Sensoren können ein Abstand zu dem Objekt und insbesondere eine relative Lage zwischen dem Kraftfahrzeug und dem Objekt bestimmt werden. Es kann auch vorgesehen sein, dass das Objekt in eine digitale Umgebungskarte eingetragen wird, welche die Umgebung des Kraftfahrzeugs beschreibt. Bei dem Objekt kann es sich um ein Objekt handeln, welches eine Parklücke begrenzt. Falls sich kein Objekt in der Umgebung befindet, kann der Kollisionsabstand einen Maximalwert aufweisen beziehungsweise maximal sein. Während der Bewegung des Kraftfahrzeugs entlang der Trajektorie wird einerseits ein Hinweisabstand (DTH - Distance To Hint) und andererseits ein Kollisionsabstand (DTC - Distance To Collision) bestimmt. Der Hinweisabstand beschreibt den Abstand zu dem Wendepunkt der Trajektorie bei der Fahrt des Kraftfahrzeugs entlang der Trajektorie. Der Kollisionsabstand beschreibt den Abstand zu dem zumindest einen Objekt in der Umgebung bei der Fahrt entlang der Trajektorie, falls das Objekt vorhanden ist. Auf Grundlage des Hinweisabstands und/oder des Kollisionsabstands kann dann der Restweg bestimmt werden, der die verbleibende Wegstrecke bis zu einer Ansteuerung des Bremssystems beschreibt. Falls also das Ende des Restwegs erreicht ist, wird mit dem Kraftfahrzeug eine Bremsung durchgeführt. Erfindungsgemäß ist es nun vorgesehen, dass ein zeitlicher Verlauf des Hinweisabstands bestimmt wird. Der zeitliche Verlauf des Hinweisabstands wird auf Änderungen beziehungsweise auf Schwankungen hin untersucht. In Abhängigkeit von den Änderungen, die in dem zeitlichen Verlauf des Hinweisabstands erkannt wurden, kann dann fortlaufend ein korrigierter Hinweisabstand bestimmt werden. In gleicher Weise wird ein zeitlicher Verlauf des Kollisionsabstands bestimmt. Auch der zeitliche Verlauf des Kollisionsabstands wird auf Änderungen beziehungsweise Schwankungen hin untersucht. Anhand der erkannten Änderungen in dem zeitlichen Verlauf des Kollisionsabstands kann dann fortlaufend ein korrigierter Kollisionsabstand bestimmt werden. Insbesondere kann der zeitliche Verlauf des Hinweisabstands geglättet werden und hieraus der korrigierte Hinweisabstand fortlaufend bestimmt werden. Es kann auch vorgesehen sein, dass der zeitliche Verlauf des Kollisionsabstands geglättet wird und hieraus fortlaufend der korrigierte Kollisionsabstand bestimmt wird. Aus dem korrigierten Hinweisabstand und dem korrigierten Kollisionsabstand kann dann der Restweg für die Ansteuerung des Bremssystems bestimmt werden. Insgesamt kann aus dem korrigierten Hinweisabstand und dem korrigierten Kollisionsabstand ein geglätteter Restweg bestimmt werden. Damit bleiben Änderungen in dem Verlauf des Hinweisabstands und/oder des Kollisionsabstands gegebenenfalls unberücksichtigt, welche aufgrund von Messungen hervorgerufen werden. Wenn sich kein Objekt beziehungsweise Hindernis in der Umgebung des Kraftfahrzeugs befindet, kann der Restweg anhand des korrigierten Hinweisabstands bestimmt werden, da der Kollisionsabstand beziehungsweise der korrigierte Kollisionsabstand in diesem Fall maximal ist. Dies ermöglicht eine zuverlässige Bestimmung des Restwegs. Ferner kann durch den geglätteten Restweg eine unruhige Bremsung und somit eine Verunsicherung des Fahrers verhindert werden.

Ferner wird zum Bestimmen des korrigierten Hinweisabstands und/oder des korrigierten Kollisionsabstands als eine Änderung ein Sprung in dem zeitlichen Verlauf des Hinweisabstands und/oder in dem zeitlichen Verlauf des Kollisionsabstands erkannt. Mit anderen Worten wird überprüft, ob der zeitliche Verlauf des Hinweisabstands Sprünge beziehungsweise markante Anstiege oder Abfälle aufweist. Ein Sprung beschreibt insbesondere eine vorbestimmte Änderung des Hinweisabstands und/oder des Kollisionsabstands innerhalb einer vorbestimmten zeitlichen Dauer. Diese Sprünge können dann geglättet werden, um den korrigierten Hinweisabstand fortlaufend zu bestimmen. Auch in dem zeitlichen Verlauf des Kollisionsabstands können die Sprünge geglättet werden, um den korrigierten Kollisionsabstand zu bestimmen. Somit kann ein schwankender Verlauf des Restwegs unterbunden werden.

Falls als eine Änderung ein positiver Sprung in dem zeitlichen Verlauf des Hinweisabstands und/oder des Kollisionsabstands erkannt wird und eine Höhe des positiven Sprungs einen vorbestimmten Schwellenwert unterschreitet, wird der korrigierte Hinweisabstand und/oder der korrigierte Kollisionsabstand bevorzugt als konstant angenommen. Sobald der zeitliche Verlauf des Hinweisabstands und/oder der zeitliche Verlauf des Kollisionsabstands bestimmt wurden, kann überprüft werden, ob die zeitlichen Verläufe einen positiven Sprung, das heißt eine sprungartige Erhöhung aufweisen. Für den positiven Sprung des zeitlichen Verlaufs des Hinweisabstands und den positiven Sprung des zeitlichen Verlaufs des Kollisionsabstands kann jeweils ein Schwellenwert vorgegeben werden. Falls der jeweilige positive Sprung unterhalb dieses Schwellenwerts liegt, kann als korrigierter Hinweisabstand und/oder als korrigierter Kollisionsabstand ein konstanter Wert angenommen werden. Dieser konstante Wert kann so lange angenommen werden, bis der zeitliche Verlauf des Hinweisabstands beziehungsweise der zeitliche Verlauf des Kollisionsabstands wieder diesen konstanten Wert erreicht. Somit können auf einfache Weise verhältnismäßig geringe positive Sprünge geglättet werden.

Falls als eine Änderung ein positiver Sprung in dem zeitlichen Verlauf des Hinweisabstands und/oder des Kollisionsabstands erkannt wird und eine Höhe des positiven Sprungs einen vorbestimmten Schwellenwert überschreitet, kann der korrigierte Hinweisabstand und/oder der korrigierte Kollisionsabstand bevorzugt erhöht werden. Falls der positive Sprung in dem zeitlichen Verlauf des Hinweisabstands beziehungsweise in dem zeitlichen Verlauf des Kollisionsabstands größer als der jeweilige vorbestimmte Schwellenwert ist, kann der korrigierte Hinweisabstand beziehungsweise der korrigierte Kollisionsabstand ab dem Zeitpunkt des Sprungs konstant erhöht werden. Mit anderen Worten wird eine Rampe vorgesehen, entlang welcher der korrigierte Hinweisabstand beziehungsweise der korrigierte Kollisionsabstand erhöht wird. Dabei kann der korrigierte Hinweisabstand beziehungsweise der korrigierte Kollisionsabstand in aufeinanderfolgenden Zyklen jeweils um ein vorbestimmtes Inkrement erhöht werden, bis der zeitliche Verlauf des Hinweisabstands beziehungsweise des Kollisionsabstands wieder erreicht wird. Dies ermöglicht eine einfache Glättung von verhältnismäßig hohen Sprüngen in dem zeitlichen Verlauf des Hinweisabstands beziehungsweise des Kollisionsabstands.

Falls als eine Änderung in dem zeitlichen Verlauf des Hinweisabstands ein negativer Sprung erkannt wird, wird zum Bestimmen des korrigierten Hinweisabstands bevorzugt ein Wert zu dem zeitlichen Verlauf des Hinweisabstands hinzuaddiert. Mit anderen Worten kann ein Offset zu dem zeitlichen Verlauf des Hinweisabstands hinzuaddiert werden, sobald ein negativer Sprung in dem zeitlichen Verlauf des Hinweisabstands vorhanden ist. Der negative Sprung beschreibt insbesondere einen sprunghaften Abfall des Hinweisabstands. Dieser Offset beziehungsweise Wert kann so lange zu dem zeitlichen Verlauf des Hinweisabstands hinzuaddiert werden, solange dieser negative Sprung vorhanden ist beziehungsweise erkannt wurde. Somit kann auf einfache Weise ein negativer Sprung in dem Hinweisabstand geglättet werden.

Falls als eine Änderung in dem zeitlichen Verlauf des Kollisionsabstands ein negativer Sprung erkannt wird, wird der Kollisionsabstand bevorzugt als der korrigierte Kollisionsabstand angenommen. Mit anderen Worten werden negative Sprünge in dem zeitlichen Verlauf des Kollisionsabstands nicht geglättet. Solche negativen Sprünge können beispielsweise auftreten, falls dynamische beziehungsweise sich bewegende Objekte mit Hilfe der Sensoren erkannt werden und sich dadurch der Kollisionsabstand verringert. In diesem Fall wird als der korrigierte Kollisionsabstand der aktuelle beziehungsweise der gemessene Kollisionsabstand verwendet. Somit kann insbesondere beim Vorhandensein von dynamischen Hindernissen beziehungsweise Objekten die Sicherheit gewährleistet werden.

Weiterhin ist es vorteilhaft, wenn der Restweg anhand eines Minimums des korrigierten Kollisionsabstands und des korrigierten Hinweisabstands bestimmt wird, falls der korrigierte Hinweisabstand größer als der korrigierte Kollisionsabstand ist. Um den Restweg zu bestimmen, wird das Minimum aus dem korrigierten Kollisionsabstand und dem korrigierten Hinweisabstand herangezogen. Falls allerdings der korrigierte Kollisionsabstand kleiner als der korrigierte Hinweisabstand ist, wird der korrigierte Kollisionsabstand zur Bestimmung des Restwegs herangezogen. Somit kann eine Kollision mit einem Objekt zuverlässig verhindert werden.

In einer weiteren Ausführungsform werden zum Bestimmen des korrigierten Hinweisabstands und/oder des korrigierten Kollisionsabstands Sprünge zwischen dem zeitlichen Verlauf des Hinweisabstands und dem zeitlichen Verlauf des Kollisionsabstands geglättet. Wenn bei der Berechnung des Restwegs zwischen dem Kollisionsabstand und dem Hinweisabstand oder zwischen dem Hinweisabstand und dem Kollisionsabstand gewechselt wird, können auch hier Sprünge in dem sich insgesamt ergebenden Verlauf des Restwegs erkannt werden und geglättet werden. Auch hier kann es vorgesehen sein, dass für die Sprünge zwischen den Übergängen zwischen dem Hinweisabstand und dem Kollisionsabstand der Weg für den Restweg konstant gehalten wird oder entsprechend einer Rampe erhöht wird. Hier kann ein Schwellenwert für den Verlauf des Restwegs vorgegeben sein. Somit kann ein schwankender Verlauf des Restwegs vermieden werden.

In einer weiteren Ausführungsform wird ein Hinweis ausgegeben, falls der Hinweisabstand beim Manövrieren des Kraftfahrzeugs überschritten wird. Mit anderen Worten kann ein Flag besetzt werden, falls bei dem Manövrieren des Kraftfahrzeugs der bestimmte Hinweisabstand überschritten wird. Dieses Flag kann so lange gesetzt werden, bis sich das Fahrzeug im Stillstand befindet. Wenn der Hinweisabstand bei dem Manövrieren entlang der Trajektorie überschritten wird, kann dieser einen negativen Wert aufweisen. Anschließend kann dann das Kraftfahrzeug in entgegengesetzter Fahrtrichtung weiter bewegt werden oder in dieselbe Richtung weiter bewegt werden. Somit wird ein Hinweis ausgegeben, falls der ursprünglich bestimmte Wendepunkt bereits erreicht ist. Weiterhin kann es vorgesehen sein, dass der Restweg bei dem Überschreiten des Hinweisabstands anhand des Minimums aus dem korrigierten Hinweisabstand und dem korrigierten Kollisionsabstand bestimmt wird.

Weiterhin ist es vorteilhaft, wenn eine Bestimmung des korrigierten Hinweisabstands und/oder des korrigierten Kollisionsabstands nach einem Gangwechsel des Kraftfahrzeugs aktualisiert wird. Mit anderen Worten wird das Verfahren neu gestartet, falls ein Gangwechsel beziehungsweise eine Änderung der Fahrtrichtung durchgeführt wird. Es kann auch vorgesehen sein, dass das Verfahren neu gestartet wird, falls das Kraftfahrzeug am Ende des Restwegs angehalten wurde beziehungsweise abgebremst wurde und sich die Situation gleichzeitig so verändert hat, dass in die gleiche Richtung wie zuvor weitergefahren werden kann. Somit können der korrigierte Kollisionsabstand und der korrigierte Hinweisabstand die jeweiligen Abschnitte der Trajektorie zuverlässig bestimmt werden.

Eine erfindungsgemäße Steuereinrichtung für ein Fahrerassistenzsystem eines Kraftfahrzeugs ist zum Durchführen eines erfindungsgemäßen Verfahrens ausgelegt. Die Steuereinrichtung kann insbesondere durch ein elektronisches Steuergerät des Kraftfahrzeugs gebildet sein.

Ein erfindungsgemäßes Fahrerassistenzsystem für ein Kraftfahrzeug umfasst eine erfindungsgemäße Steuereinrichtung. Das Fahrerassistenzsystem kann eine Mehrzahl von Sensoren umfassen, mit denen Objekte in der Umgebung des Kraftfahrzeugs erkannt werden können. Diese können zur Datenübertragung mit der Steuereinrichtung verbunden sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: ein schematisches Ablaufdiagramm eines Verfahrens zum Manövrieren des Kraftfahrzeugs;
- Fig. 3: ein zeitlicher Verlauf eines Hinweisabstands und eines Kollisionsabstands;
- Fig. 4: ein zeitlicher Verlauf des Hinweisabstands und des Kollisionsabstands in einer weiteren Ausführungsform;
- Fig. 5: ein zeitlicher Verlauf des Hinweisabstands und des Kollisionsabstands in einer weiteren Ausführungsform;
- Fig. 6: ein schematisches Ablaufdiagramm eines Verfahrens zum Bestimmen eines korrigierten Hinweisabstands;
- Fig. 7: ein schematisches Ablaufdiagramm eines Verfahrens zum Bestimmen eines korrigierten Kollisionsabstands;
- Fig. 8: ein schematisches Ablaufdiagramm eines Verfahrens zum Bestimmen eines Restwegs bis zur Ansteuerung eines Bremssystems; und
- Fig. 9 bis 18:: unterschiedliche Beispiele zur Bestimmung des Restwegs anhand des zeitlichen Verlaufs des Hinweisabstands und des Kollisionsabstands.

In den Figuren werden gleiche und funktionsgleiche Elemente mit den gleichen Bezugszeichen versehen.

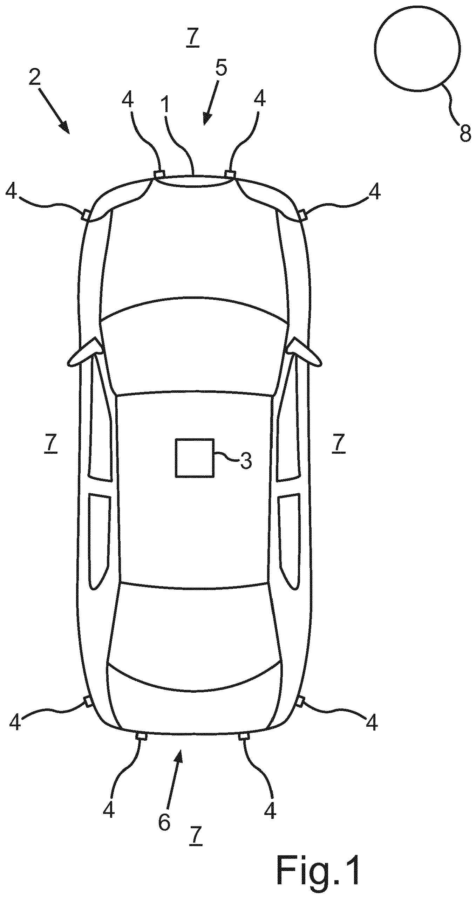

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches eine Steuereinrichtung 3 umfasst. Die Steuereinrichtung 3 kann beispielsweise durch ein elektronisches Steuergerät (ECU - Electronic Control Unit) des Kraftfahrzeugs 1 gebildet sein.

Darüber hinaus umfasst das Fahrerassistenzsystem 2 eine Mehrzahl von Sensoren 4, die verteilt an dem Kraftfahrzeug 1 angeordnet sind. Die Sensoren 4 können beispielsweise als Ultraschallsensoren, Radarsensoren, Lidar-Sensoren, Laserscanner oder Kameras ausgebildet sein. Vorliegend sind die Sensoren 4 als Ultraschallsensoren ausgebildet. Dabei sind vier Sensoren 4 in einem Frontbereich 5 und vier Sensoren 4 in einem Heckbereich 6 des Kraftfahrzeugs 1 angeordnet. Die Anzahl und Anordnung der Sensoren 4 ist beliebig. Das Fahrerassistenzsystem 2 kann auch 12 Sensoren 4 aufweisen. Mit den Sensoren 4 können Objekte 8 in einer Umgebung 7 des Kraftfahrzeugs 1 erfasst werden. Die Sensoren 4 sind zur Datenübertragung mit der Steuereinrichtung 3 verbunden.

Mit Hilfe der Steuereinrichtung 3 soll das Kraftfahrzeug 1 manövriert werden. Hierzu kann mit der Steuereinrichtung 3 auf der Grundlage von Sensordaten, die mit den Sensoren 4 bereitgestellt werden, eine Trajektorie bestimmt werden, welche die zukünftige Bewegung des Kraftfahrzeugs beschreibt. Ferner kann mit der Steuereinrichtung 3 ein Restweg R bestimmt werden, ab welchem ein Bremssystem des Kraftfahrzeugs 1 angesteuert wird. Hierzu wird einerseits ein Hinweisabstand DTH bestimmt, welcher einen Abstand zu einem Wendepunkt der Trajektorie während der Fahrt entlang der Trajektorie beschreibt. Darüber hinaus wird ein Kollisionsabstand DTC bestimmt, welcher einen Abstand zu dem Objekt 8 während der Fahrt entlang der Trajektorie beschreibt.

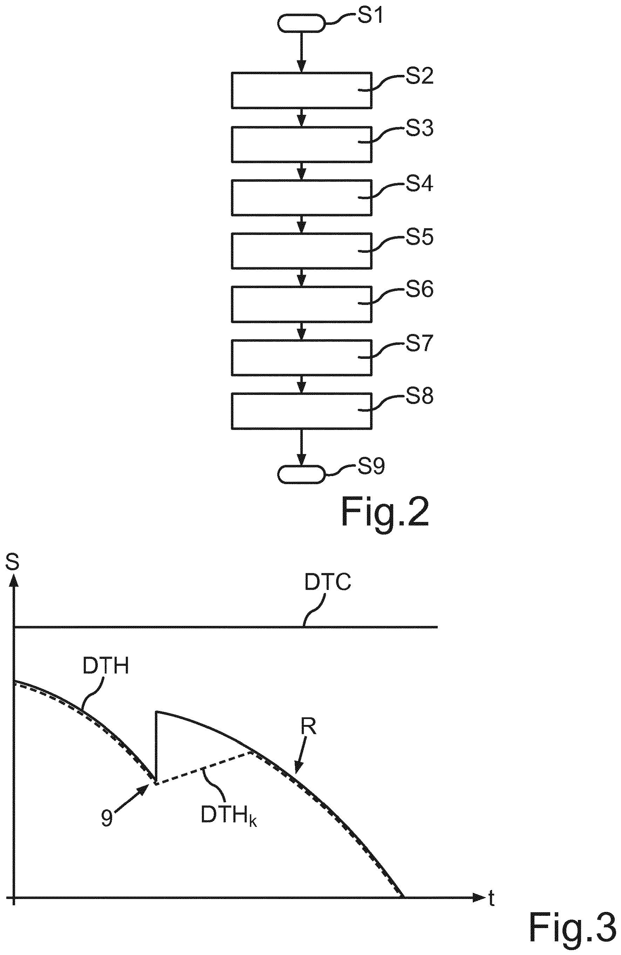

Fig. 2 zeigt ein schematisches Ablaufdiagramm eines Verfahrens zum Manövrieren des Kraftfahrzeugs 1. In einem Schritt S1 wird das Verfahren gestartet. In einem darauffolgenden Schritt S2 wird überprüft, ob ein Gangwechsel erfolgt ist. In einem Schritt S3 wird ein korrigierter Hinweisabstand DTHₖ bestimmt. In einem Schritt S4 wird ein korrigierter Kollisionsabstand DTCₖ bestimmt. In einem Schritt S5 werden der korrigierte Hinweisabstand DTHₖ und der korrigierte Kollisionsabstand DTCₖ verglichen und in einem Schritt S6 wird auf Grundlage des korrigierten Hinweisabstands DTHₖ und des korrigierten Kollisionsabstands DTCₖ der Restweg R bestimmt. In einem Schritt S7 wird dieser bestimmte Restweg R dann geglättet. In einem Schritt S8 wird ein Hinweis ausgegeben, falls der Hinweisabstand DTH überschritten wurde. Schließlich wird das Verfahren mit einem Schritt S9 beendet.

Zum Bestimmen des korrigierten Hinweisabstands DTHₖ wird zunächst der zeitliche Verlauf des Hinweisabstands DTH bestimmt. Anschließend wird überprüft, ob der zeitliche Verlauf des Hinweisabstands DTH einen Sprung 9, 10 aufweist. Dieser Sprung 9, 10 kann dann entsprechend geglättet werden, um den korrigierten Hinweisabstand DTHₖ zu bestimmen. In gleicher Weise kann auch der zeitliche Verlauf des Kollisionsabstands DTC bestimmt werden und zum Bestimmen des korrigierten Kollisionsabstands DTCₖ geglättet werden.

Fig. 3 zeigt einen Verlauf eines Wegs S in Abhängigkeit von der Zeit t. Dabei sind der zeitliche Verlauf des Hinweisabstands DTH sowie der zeitliche Verlauf des Kollisionsabstands DTC dargestellt. Der Kollisionsabstand DTC ist in Abhängigkeit von der Zeit t konstant. Der zeitliche Verlauf des Hinweisabstands DTH weist einen positiven Sprung 9 auf. Bei dem Sprung 9 wird überprüft, ob eine Höhe des Sprungs 9 einen Schwellenwert überschreitet. Dies ist vorliegend der Fall. Dabei ist es vorgesehen, dass dieser Sprung 9 geglättet wird. Es wird also ein korrigierter Hinweisabstands DTHₖ bestimmt, welcher dadurch bestimmt wird, dass dieser ab dem Zeitpunkt des Sprungs 9 konstant erhöht wird. Der korrigierte Hinweisabstand DTHₖ weist also ab dem Zeitpunkt des Sprungs 9 einen rampenförmigen Verlauf auf. Ansonsten entspricht der Verlauf des korrigierten Hinweisabstands DTHₖ dem Verlauf des Hinweisabstands DTH. In diesem Fall entspricht der Verlauf des korrigierten Hinweisabstands DTHₖ auch dem Verlauf des Restwegs R.

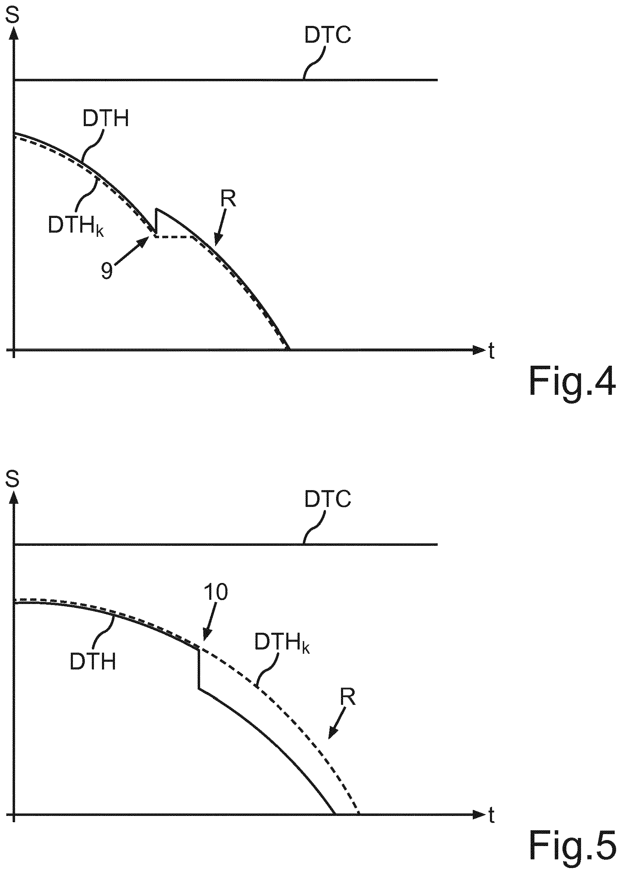

Im Vergleich hierzu zeigt Fig. 4 ein Beispiel, bei welchem der zeitliche Verlauf des Hinweisabstands DTH einen positiven Sprung 9 aufweist, wobei die Höhe des Sprungs 9 geringer als der vorbestimmte Schwellenwert ist. In diesem Fall wird zur Bestimmung des korrigierten Hinweisabstands DTHₖ der korrigierte Hinweisabstand DTHₖ so lange als konstant angenommen, bis der zeitliche Verlauf des Hinweisabstands DTH wieder den konstanten Wert des korrigierten Hinweisabstands DTHₖ aufweist.

Fig. 5 zeigt ein weiteres Beispiel, bei welchem der zeitliche Verlauf des Hinweisabstands DTH einen negativen Sprung 10 aufweist. Dieser negative Sprung 10 kann dadurch ausgeglichen werden, dass zu dem Hinweisabstand DTH im Bereich des negativen Sprungs 10 ein Offset zu dem Hinweisabstand DTH hinzuaddiert wird. Hieraus ergibt sich der Verlauf des korrigierten Hinweisabstands DTHₖ.

Falls der Kollisionsabstand DTC einen positiven Sprung 9 aufweist, kann dieser analog zu dem in den Fig. 3 und Fig. 4 für den Hinweisabstand DTH beschriebenen Verfahren geglättet werden. Falls der Kollisionsabstand DTC einen negativen Sprung 10 aufweist, wird dieser nicht geglättet. Somit kann garantiert werden, dass eine Kollision mit dem Objekt 8 vermieden wird. Dies eignet sich insbesondere, wenn es sich bei dem Objekt 8 um ein dynamisches beziehungsweise bewegliches Objekt 8 handelt.

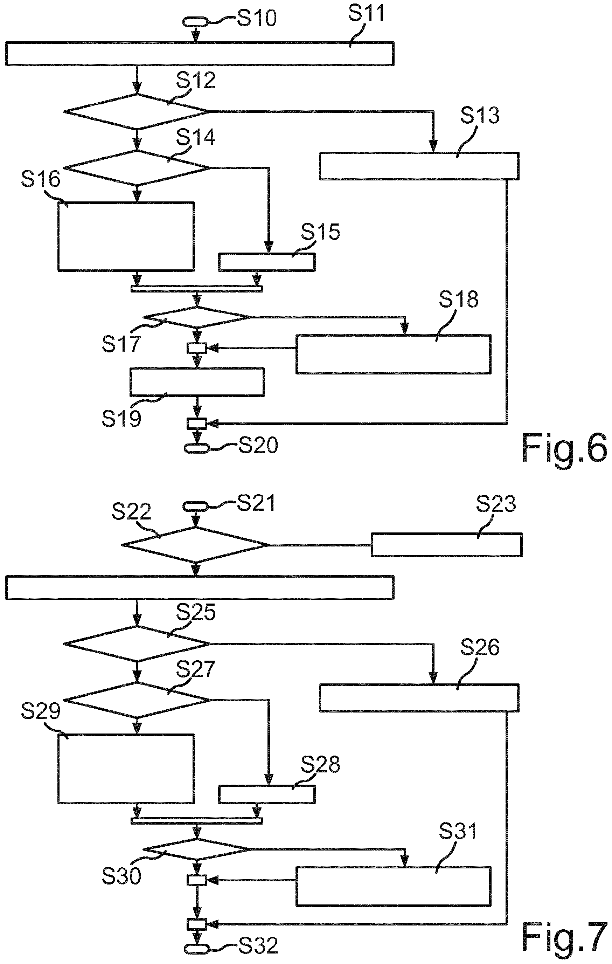

Fig. 6 zeigt ein schematisches Ablaufdiagramm eines Verfahrens zum Bestimmen des korrigierten Hinweisabstands DTHₖ. In einem Schritt S10 wird das Verfahren gestartet. In einem Schritt S11 wird das aktuelle Hinweisabstand DTH als Abstand zu dem Wendepunkt bestimmt. In einem Schritt S12 wird überprüft, ob der zeitliche Verlauf des Hinweisabstand DTH einen Sprung 9,10 aufweist. Ist dies nicht der Fall, wird in einem Schritt S13 als der korrigierte Hinweisabstand DTHₖ auf Grundlage des zeitlichen Verlaufs der Hinweisabstand DTH bestimmt. Wurde in dem Schritt S12 ein Sprung 9, 10 erkannt, wird in einem Schritt S14 überprüft, ob die Höhe des Sprungs kleiner als der vorbestimmte Schwellenwert ist. Ist dies der Fall, wird der korrigierte Hinweisabstand DTHₖ konstant gehalten (Schritt S15). Ist die Höhe des Sprungs 9, 10 größer als der Schwellenwert, wird in einem Schritt S16 der korrigierte Hinweisabstand DTHₖ gemäß der Rampe erhöht. In einem Schritt S17 wird weiterhin überprüft, ob ein Sprung 9, 10 vorhanden ist. Ist dies der Fall, erfolgt in einem Schritt S18 eine weitere Glättung des Sprungs 9, 10. Ansonsten wird in einem Schritt S19 der korrigierte Hinweisabstand DTHₖ bestimmt. Schließlich wird das Verfahren in einem Schritt S20 beendet.

Fig. 7 zeigt ein schematisches Ablaufdiagramm eines Verfahrens zum Bestimmen des korrigierten Kollisionsabstand DTCₖ. Das Verfahren wird in einem Schritt S21 gestartet. In einem Schritt S22 wird überprüft, ob der korrigierte Kollisionsabstand DTCₖ größer als ein Grenzwert ist. Ist dies der Fall, wird als korrigierter Kollisionsabstand DTCₖ der Kollisionsabstand DTC verwendet (Schritt S23). Ist dies nicht der Fall, wird in einem Schritt S24 der aktuelle Kollisionsabstand DTC in Abhängigkeit von der bereits zurückgelegten Wegstrecke bestimmt. In einem Schritt S25 wird überprüft, ob in dem zeitlichen Verlauf des Kollisionsabstands DTC ein positiver Sprung 9 oder ein negativer Sprung 10 vorhanden ist. Ist ein negativer Sprung 10 vorhanden, wird in einem Schritt S26 der korrigierte Kollisionsabstand DTCₖ als der Kollisionsabstand DTC betrachtet. Ist ein positiver Sprung 9 vorhanden, wird in einem Schritt S27 überprüft, ob die Höhe des Sprungs 9 größer als der vorbestimmte Schwellenwert ist. Ist dies nicht der Fall, wird der korrigierte Kollisionsabstand DTCₖ konstant gehalten (Schritt S28). Andernfalls wird in einem Schritt S29 eine Rampe bestimmt. In einem Schritt S30 erfolgt eine Überprüfung, ob der korrigierte Kollisionsabstand DTCₖ kleiner als ein Schwellenwert ist. Ist dies nicht der Fall, wird der korrigierte Kollisionsabstand DTCₖ auf Grundlage der zurückgelegten Wegstrecke bestimmt (Schritt S31). Schließlich wird das Verfahren in einem Schritt S32 beendet.

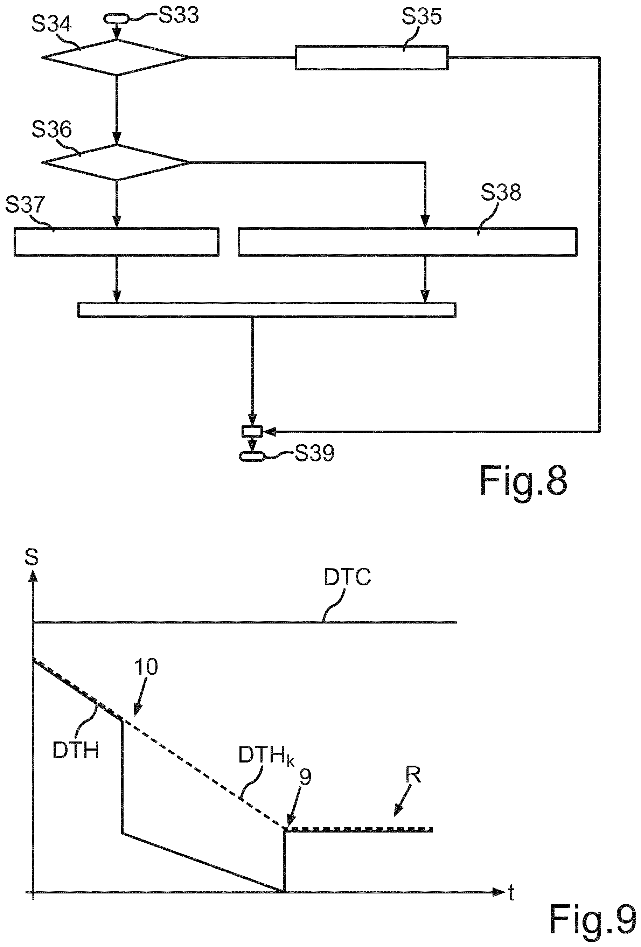

Fig. 8 zeigt ein schematisches Ablaufdiagramm eines Verfahrens zum Bestimmen des Restwegs R. Das Verfahren wird in einem Schritt S33 gestartet. In einem Schritt S34 wird überprüft, ob bei Bestimmung des Restwegs R ein Wechsel zwischen dem Kollisionsabstand DTC und dem Hinweisabstand DTH oder umgekehrt erfolgt ist und ob ein Sprung 9, 10 bei dem Übergang vorhanden ist. Ist dies nicht der Fall, erfolgt in einem Schritt S35 keine Glättung des Restwegs R. In einem Schritt S36 wird dann überprüft, ob bereits eine Rampe zur Glättung des Sprungs 9, 10 vorhanden ist. Ist dies nicht der Fall, wird in einem Schritt S37 eine Rampe bestimmt. Andernfalls wird in einem Schritt S38 die bestehende Rampe weiter verfolgt. Schließlich wird das Verfahren in einem Schritt S39 beendet.

In den Fig. 9 bis Fig. 18 werden unterschiedliche Beispiele zur Bestimmung des Restwegs R auf Grundlage des zeitlichen Verlaufs des Hinweisabstands DTH und des zeitlichen Verlaufs des Kollisionsabstands DTC beschrieben.

Fig. 9 zeigt ein Beispiel, bei welchem der Kollisionsabstand DTC konstant ist und größer als der Hinweisabstand DTH ist. Der Hinweisabstand DTH weist zunächst einen negativen Sprung 10 auf. Wie bereits beschrieben, wird hier ein Offset zur Glättung dieses negativen Sprungs 10 bestimmt. Anschließend weist der Hinweisabstand DTH einen positiven Sprung 9 auf. Dieser positive Sprung 9 gleicht den Offset wieder aus beziehungsweise minimiert diesen. Dies bedeutet, dass der Wert des Offsets fortlaufend an die Sprünge 9, 10 angepasst wird, um den Restweg R zu glätten. Somit kann der korrigierte Hinweisabstand DTHₖ bestimmt, der wiederum dem Restweg R entspricht.

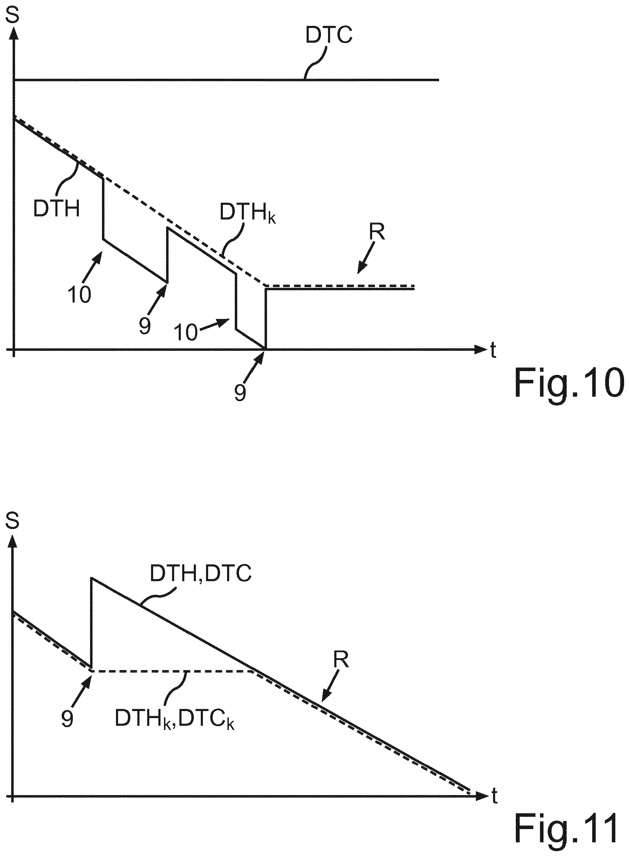

Fig. 10 zeigt ein Beispiel, bei welchem der Kollisionsabstand DTC konstant ist und größer als der Hinweisabstand DTH ist. Der Hinweisabstand DTH weist zunächst einen negativen Sprung 10 auf, an welchen sich ein positiver Sprung 9 anschließt. Zudem weist der Hinweisabstand DTH einen weiteren negativen Sprung 10 auf, an den sich wiederum ein positiver Sprung 9 anschließt. Hierbei wird der Offset während der jeweiligen Sprünge 9, 10 so bestimmt, dass beide aufeinanderfolgende Sprünge 9, 10 geglättet werden können. Der Restweg R entspricht dem zeitlichen Verlauf des korrigierten Hinweisabstands DTHₖ.

Fig. 11 zeigt ein Beispiel, bei welchem ein verhältnismäßig kleiner positiver Sprung 9 vorhanden ist. Dies gilt sowohl für einen positiven Sprung 9 im zeitlichen Verlauf des Hinweisabstands DTH als auch für einen positiven Sprung 9 im zeitlichen des Kollisionsabstands DTC. Diese positiven Sprünge 9 können dadurch geglättet werden, dass der korrigierte Hinweisabstand DTHₖ beziehungsweise der korrigierte Kollisionsabstand DTCₖ konstant gehalten werden. Der Restweg R entspricht dem zeitlichen Verlauf des korrigierten Hinweisabstands DTHₖ beziehungsweise dem zeitlichen Verlauf des korrigierten Kollisionsabstands DTCₖ.

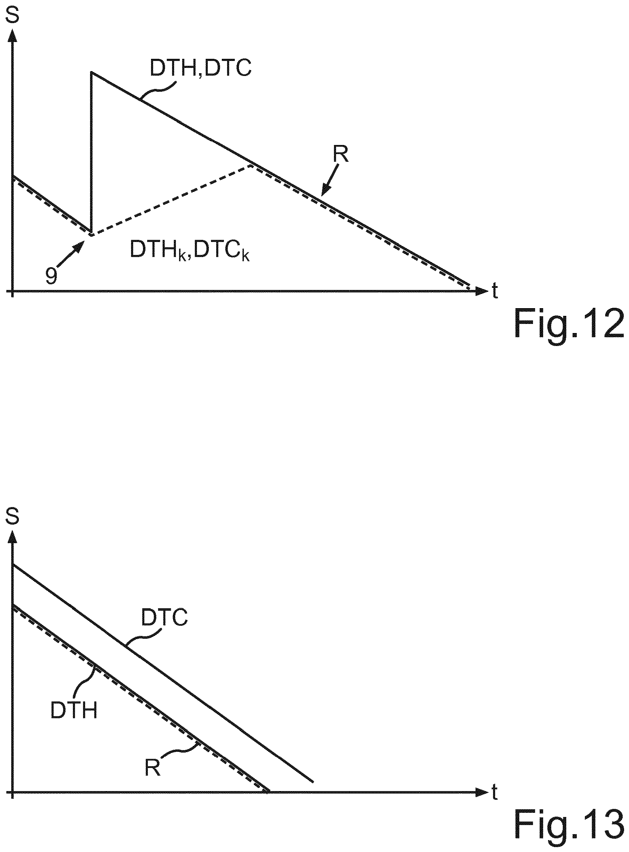

Im Vergleich hierzu zeigt Fig. 12 ein Beispiel, bei welchem der Hinweisabstand DTH beziehungsweise der Kollisionsabstand DTC einen verhältnismäßig großen Sprung 9 aufweisen. Hier kann zur Bestimmung des korrigierten Hinweisabstands DTHₖ beziehungsweise des korrigierten Kollisionsabstands DTCₖ eine Rampe bestimmt werden. Der Restweg R entspricht dem zeitlichen Verlauf des korrigierten Hinweisabstands DTHₖ beziehungsweise dem zeitlichen Verlauf des korrigierten Kollisionsabstands DTCₖ.

Fig. 13 zeigt ein Beispiel, bei welchem weder der Kollisionsabstand DTC noch der Hinweisabstand DTH einen Sprung aufweisen. Hier ist keine Anpassung des Hinweisabstands DTH beziehungsweise des Kollisionsabstands DTC erforderlich. Hier ergibt sich der Restweg R aus dem Minimum von Hinweisabstand DTH und Kollisionsabstand DTC. Dies gilt für den Fall, dass der Kollisionsabstand DTC größer als der Hinweisabstand DTH ist. Andernfalls wird der Restweg R auf Grundlage des Kollisionsabstands DTC bestimmt.

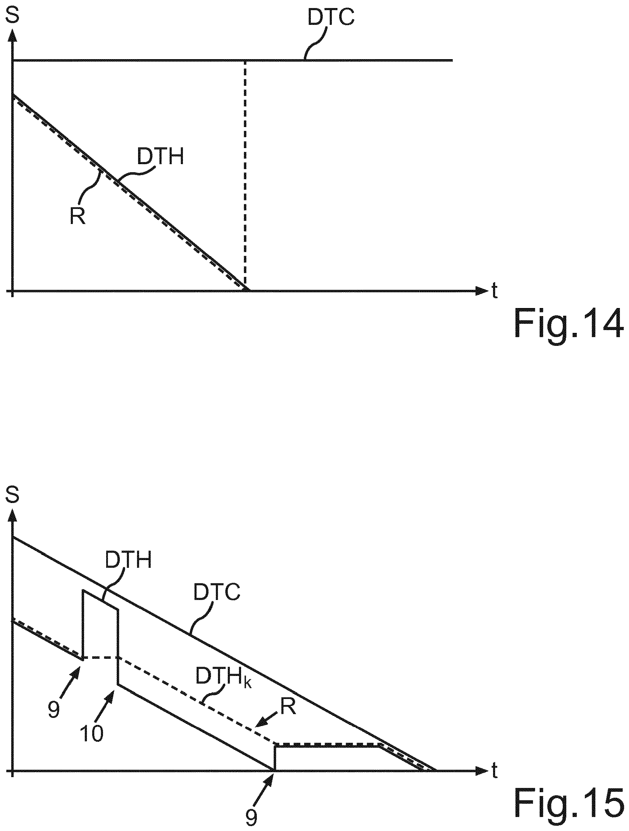

Bei dem Beispiel von Fig. 14 ist der Kollisionsabstand DTC in Abhängigkeit von der Zeit t konstant. Zudem ist der Kollisionsabstand DTC größer als der Hinweisabstand DTH. Der Hinweisabstand DTH weist einen linearen Verlauf und keine Sprünge auf. Hier entspricht der Restweg R dem Hinweisabstand DTH.

Fig. 15 zeigt ein Beispiel, bei welchem der Kollisionsabstand DTC einen linearen Verlauf aufweist, wobei der Kollisionsabstand DTC größer als der Hinweisabstand DTH ist. Der Hinweisabstand DTH weist zunächst einen verhältnismäßig geringen positiven Sprung 9 auf. Hierbei wird der korrigierte Hinweisabstand DTHₖ für die Dauer des positiven Sprungs 9 konstant gehalten. Anschließend weist der Hinweisabstand DTH einen negativen Sprung 10 auf. Hier wird der Offset zu dem Hinweisabstand DTH addiert. Der Restweg R entspricht dem zeitlichen Verlauf des korrigierten Hinweisabstands DTHₖ.

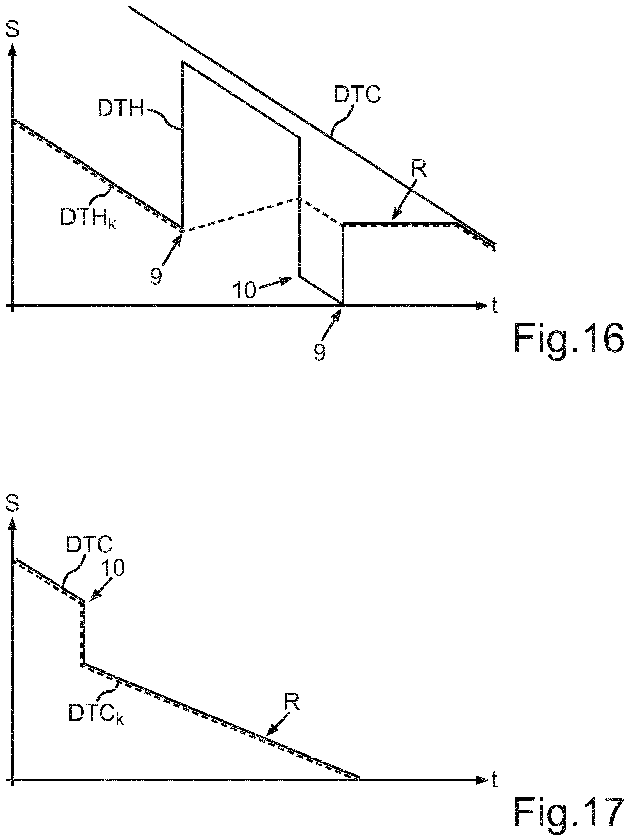

Fig. 16 zeigt ein Beispiel, bei welchem der Kollisionsabstand DTC einen linearen Verlauf aufweist, wobei der Kollisionsabstand DTC größer als der Hinweisabstand DTH ist. Der Hinweisabstand DTH weist zunächst einen verhältnismäßig hohen positiven Sprung 9 auf. Hier wird der korrigierte Hinweisabstand DTHₖ in dem Bereich des Sprungs 9 durch eine Rampe angenähert. Bei dem nachfolgenden negativen Sprung 10 des Hinweisabstands DTH wird der Offset zu dem Hinweisabstand DTH addiert. Der Restweg R entspricht dem zeitlichen Verlauf des korrigierten Hinweisabstands DTHₖ.

Fig. 17 zeigt ein Beispiel, bei welchem der zeitliche Verlauf des Kollisionsabstands DTC einen negativen Sprung 10 aufweist. Der Hinweisabstand DTH ist vorliegend nicht dargestellt. Dieser negative Sprung 10 wird nicht geglättet, um eine mögliche Kollision mit dem Objekt 8 zu vermeiden. Hierbei entspricht der korrigierte Kollisionsabstand DTCₖ dem Verlauf des Kollisionsabstands DTC. Dies gilt für den Fall, dass der Hinweisabstand DTH größer als der Kollisionsabstand DTC ist. Der Restweg R entspricht dem zeitlichen Verlauf des Kollisionsabstands DTC beziehungsweise des korrigierten Kollisionsabstands DTCₖ.

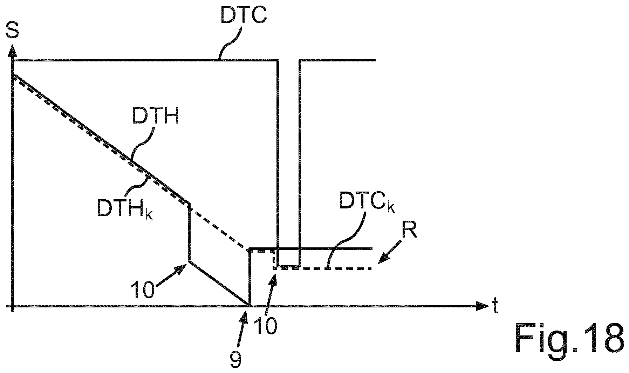

Schließlich zeigt Fig. 18 ein Beispiel, bei welchem der Hinweisabstand DTH zunächst einen negativen Sprung 10 aufweist, der durch den Offset geglättet wird. Anschließend weist der Kollisionsabstand DTC einen negativen Sprung 10 auf. Der negative Sprung 10 des Kollisionsabstands DTC kann sich beispielsweise durch ein dynamisches Objekt 8 ergeben, welches mit den Sensoren 4 erfasst wird. Der negative Sprung 10 in dem zeitlichen Verlauf des Kollisionsabstands DTC wird nicht geglättet. Zur Bestimmung des Restwegs R wird das Minimum aus dem korrigierten Hinweisabstand DTHₖ und dem korrigierten Kollisionsabstand DTCₖ verwendet.

## Patentansprüche

1. Verfahren zum Manövrieren eines Kraftfahrzeugs (1), bei welchem eine Trajektorie zum Manövrieren des Kraftfahrzeugs (1) bestimmt wird, während des Manövrierens des Kraftfahrzeugs (1) entlang der Trajektorie ein Hinweisabstand (DTH), welcher einen Abstand zu einem Wendepunkt der Trajektorie beschreibt, und ein Kollisionsabstand (DTC), welcher einen Abstand zu einem Objekt (8) in einer Umgebung (7) des Kraftfahrzeugs (1) beschreibt, bestimmt werden und anhand des Hinweisabstands (DTH) und des Kollisionsabstands (DTC) ein Restweg (R) bis zum Ansteuern eines Bremssystems des Kraftfahrzeugs (1) bestimmt wird,
wobei anhand von Änderungen in dem zeitlichen Verlauf des Hinweisabstands (DTH) fortlaufend ein korrigierter Hinweisabstand (DTHₖ) bestimmt wird, anhand von Änderungen in dem zeitlichen Verlauf des Kollisionsabstands (DTC) fortlaufend ein korrigierter Kollisionsabstand (DTCₖ) bestimmt wird, und der Restweg (R) anhand des korrigierten Hinweisabstands (DTHₖ) und des korrigierten Kollisionsabstands bestimmt wird,
**dadurch gekennzeichnet, dass**
zum Bestimmen des korrigierten Hinweisabstands (DTHₖ) und/oder des korrigierten Kollisionsabstands (DTCₖ) als eine Änderung ein Sprung (9, 10) in dem zeitlichen Verlauf des Hinweisabstands (DTH) und/oder in dem zeitlichen Verlauf des Kollisionsabstands (DTC) erkannt wird.

2. Verfahren nach Anspruch 1,
**dadurch gekennzeichnet, dass**
falls als eine Änderung ein positiver Sprung (9) in dem zeitlichen Verlauf des Hinweisabstands (DTH) und/oder des Kollisionsabstands (DTC) erkannt wird und eine Höhe des positiven Sprungs (9) einen vorbestimmten Schwellenwert unterschreitet, der korrigierte Hinweisabstand (DTHₖ) und/oder der korrigierte Kollisionsabstand (DTCₖ) als konstant angenommen werden.

3. Verfahren nach einem der vorhergehenden Ansprüche,
**dadurch gekennzeichnet, dass**
falls als eine Änderung ein positiver Sprung (9) in dem zeitlichen Verlauf des Hinweisabstands (DTH) und/oder des Kollisionsabstands (DTC) erkannt wird und eine Höhe des positiven Sprungs (9) einen vorbestimmten Schwellenwert überschreitet, der korrigierte Hinweisabstand (DTHₖ) und/oder der korrigierte Kollisionsabstand (DTCₖ) erhöht werden.

4. Verfahren nach einem der vorhergehenden Ansprüche,
**dadurch gekennzeichnet, dass**
falls als eine Änderung in dem zeitlichen Verlauf des Hinweisabstands (DTH) ein negativer Sprung (10) erkannt wird, zum Bestimmen des korrigierten Hinweisabstands (DTHₖ) ein Wert zu dem zeitlichen Verlauf des Hinweisabstands (DTH) hinzuaddiert wird.

5. Verfahren nach einem der vorhergehenden Ansprüche,
**dadurch gekennzeichnet, dass**
falls als eine Änderung in dem zeitlichen Verlauf des Kollisionsabstands (DTC) ein negativer Sprung erkannt wird, der Kollisionsabstand als der korrigierte Kollisionsabstand (DTCₖ) angenommen wird.

6. Verfahren nach einem der vorhergehenden Ansprüche,
**dadurch gekennzeichnet, dass**
der Restweg (R) anhand eines Minimums des korrigierten Hinweisabstands (DTHₖ) und des korrigierten Kollisionsabstands (DTCₖ) bestimmt wird, falls der korrigierte Hinweisabstand (DTHₖ) größer als der korrigierte Kollisionsabstand (DTCₖ) ist.

7. Verfahren nach einem der vorhergehenden Ansprüche,
**dadurch gekennzeichnet, dass**
zum Bestimmen des korrigieren Hinweisabstands (DTHₖ) und/oder des korrigierten Kollisionsabstands (DTCₖ) Sprünge zwischen dem zeitlichen Verlauf des Hinweisabstands (DTH) und dem zeitlichen Verlauf des Kollisionsabstands (DTC) geglättet werden.

8. Verfahren nach einem der vorhergehenden Ansprüche,
**dadurch gekennzeichnet, dass**
ein Hinweis ausgegeben wird, falls der Hinweisabstand (DTH) beim Manövrieren des Kraftfahrzeugs (1) überschritten wird.

9. Verfahren nach einem der vorhergehenden Ansprüche,
**dadurch gekennzeichnet, dass**
eine Bestimmung des korrigierten Hinweisabstands (DTHₖ) und des korrigierten Kollisionsabstands nach einem Gangwechsel des Kraftfahrzeugs (1) aktualisiert wird.

10. Steuereinrichtung (3) für ein Fahrerassistenzsystem (2) eines Kraftfahrzeugs (1), welche zum Durchführen eines Verfahrens nach einem der vorhergehenden Ansprüche ausgelegt ist.

11. Fahrerassistenzsystem (2) für ein Kraftfahrzeug (1) mit einer Steuereinrichtung (3) nach Anspruch 10.

12. Kraftfahrzeug (1) mit einem Fahrerassistenzsystem (2) nach Anspruch 11.

## Claims

1. Method for manoeuvring a motor vehicle (1), in which a trajectory for manoeuvring the motor vehicle (1) is determined, during the manoeuvring of the motor vehicle (1) along the trajectory, a notification distance (DTH), which describes a distance to a turning point of the trajectory, and a collision distance (DTC), which describes a distance to an object (8) in a surroundings (7) of the motor vehicle (1), are determined and, on the basis of the notification distance (DTH) and the collision distance (DTC), a distance to go (R) until the actuation of a brake system of the motor vehicle (1) is determined, wherein, on the basis of changes in the time curve of the notification distance (DTH), a corrected notification distance (DTHₖ) is determined in an ongoing manner, on the basis of changes in the time curve of the collision distance (DTC), a corrected collision distance (DTCₖ) is determined in an ongoing manner, and the distance to go (R) is determined on the basis of the corrected notification distance (DTHₖ) and the corrected collision distance,**characterized in that**,
to determine the corrected notification distance (DTHₖ) and/or the corrected collision distance (DTCₖ), a jump (9, 10) in the time curve of the notification distance (DTH) and/or in the time curve of the collision distance (DTC) is detected as a change.

2. Method according to Claim 1,**characterized in that**, if a positive jump (9) in the time curve of the notification distance (DTH) and/or the collision distance (DTC) is detected as a change and a level of the positive jump (9) falls below a predetermined threshold value, the corrected notification distance (DTHₖ) and/or the corrected collision distance (DTCₖ) are assumed to be constant.

3. Method according to either one of the preceding claims,
**characterized in that**, if a positive jump (9) in the time curve of the notification distance (DTH) and/or the collision distance (DTC) is detected as a change and a level of the positive jump (9) exceeds a predetermined threshold value, the corrected notification distance (DTHₖ) and/or the corrected collision distance (DTCₖ) are elevated.

4. Method according to any one of the preceding claims, **characterized in that**, if a negative jump (10) is detected as a change in the time curve of the notification distance (DTH), a value is added to the time curve of the notification distance (DTH) to determine the corrected notification distance (DTHₖ).

5. Method according to any one of the preceding claims, **characterized in that**, if a negative jump is detected as a change in the time curve of the collision distance (DTC), the collision distance is assumed as the corrected collision distance (DTCₖ).

6. Method according to any one of the preceding claims, **characterized in that** the distance to go (R) is determined on the basis of a minimum of the corrected notification distance (DTHₖ) and the corrected collision distance (DTCₖ) if the corrected notification distance (DTHₖ) is greater than the corrected collision distance (DTCₖ).

7. Method according to any one of the preceding claims, **characterized in that**, to determine the corrected notification distance (DTHₖ) and/or the corrected collision distance (DICₖ), jumps between the time curve of the notification distance (DTH) and the time curve of the collision distance (DTC) are smoothed.

8. Method according to any one of the preceding claims, **characterized in that** a notification is output if the notification distance (DTH) is exceeded during the manoeuvring of the motor vehicle (1).

9. Method according to any one of the preceding claims, **characterized in that** a determination of the corrected notification distance (DTHₖ) and the corrected collision distance is updated after a gear change of the motor vehicle (1).

10. Control unit (3) for a driver assistance system (2) of a motor vehicle (1), which is designed to carry out a method according to any one of the preceding claims.

11. Driver assistance system (2) for a motor vehicle (1) comprising a control unit (3) according to Claim 10.

12. Motor vehicle (1) comprising a driver assistance system (2) according to Claim 11.

## Revendications

1. Procédé de manœuvre d'un véhicule automobile (1), procédé dans lequel une trajectoire de manœuvre du véhicule automobile (1) est déterminée, une distance de référence (DTH), qui décrit une distance à un tournant de la trajectoire, et une distance de collision (DTC), qui représente une distance à un objet (8) situé dans un environnement (7) du véhicule automobile (1), est déterminée pendant la manœuvre du véhicule automobile (1) le long de la trajectoire et un chemin résiduel (R) jusqu'à ce qu'un système de freinage du véhicule automobile (1) soit activé est déterminé sur la base de la distance de référence (DTH) et de la distance de collision (DTC), une distance de référence corrigée (DTHₖ) étant déterminée en continu sur la base de variations du profil temporel de la distance de référence (DTH), une distance de collision corrigée (DTCₖ) étant déterminée en continu sur la base de variations du profil temporel de la distance de collision (DTC), et le chemin résiduel (R) étant déterminé sur la base de la distance de référence corrigée (DTHₖ) et de la distance de collision corrigée,
**caractérisé en ce que**
un saut (9, 10) est détecté comme variation dans le profil temporel de la distance de référence (DTH) et/ou dans le profil temporel de la distance de collision (DTC) afin de déterminer la distance de référence corrigée (DTHₖ) et/ou la distance de collision corrigée (DTCₖ) .

2. Procédé selon la revendication 1,
**caractérisé en ce que**
si un saut positif (9) est détecté comme variation dans le profil temporel de la distance de référence (DTH) et/ou de la distance de collision (DTC) et si une hauteur du saut positif (9) tombe au-dessous d'une valeur seuil prédéterminée, la distance de référence corrigée (DTHₖ) et/ou la distance de collision corrigée (DTCₖ) sont supposées constantes.

3. Procédé selon l'une des revendications précédentes,
**caractérisé en ce que**
si un saut positif (9) est détecté comme variation dans le profil temporel de la distance de référence (DTH) et/ou de la distance de collision (DTC) et si une hauteur du saut positif (9) dépasse une valeur seuil prédéterminée, la distance de référence corrigée (DTHₖ) et/ou la distance de collision corrigée (DTCₖ) sont augmentées.

4. Procédé selon l'une des revendications précédentes,
**caractérisé en ce que**
si un saut négatif (10) est détecté comme variation dans le profil temporel de la distance de référence (DTH), une valeur est ajoutée au profil temporel de la distance de référence (DTH) pour déterminer la distance de référence corrigée (DTHₖ).

5. Procédé selon l'une des revendications précédentes,
**caractérisé en ce que**
si un saut négatif est détecté comme variation dans le profil temporel de la distance de collision (DTC), la distance de collision est supposée être la distance de collision corrigée (DTCₖ).

6. Procédé selon l'une des revendications précédentes,
**caractérisé en ce que**
le chemin résiduel (R) est déterminé à partir d'un minimum de la distance de référence corrigée (DTHₖ) et de la distance de collision corrigée (DTCₖ) si la distance de référence corrigée (DTHₖ) est supérieure à la distance de collision corrigée (DTCₖ).

7. Procédé selon l'une des revendications précédentes, **caractérisé en ce que** des sauts entre le profil temporel de la distance de référence (DTH) et le profil temporel de la distance de collision (DTC) sont lissés afin de déterminer la distance de référence corrigée (DTHₖ) et/ou la distance de collision corrigée (DTCₖ).

8. Procédé selon l'une des revendications précédentes,
**caractérisé en ce que**
une référence est délivrée si la distance de référence (DTH) est dépassée lors de la manœuvre du véhicule automobile (1).

9. Procédé selon l'une des revendications précédentes,
**caractérisé en ce que**
une détermination de la distance de référence corrigée (DTHₖ) et de la distance de collision corrigée est actualisée après un changement de vitesse du véhicule automobile (1) .

10. Dispositif de commande (3) pour un système d'aide à la conduite (2) d'un véhicule automobile (1), lequel dispositif de commande est conçu pour mettre en œuvre un procédé selon l'une des revendications précédentes.

11. Système d'aide à la conduite (2) destiné à un véhicule automobile (1), ledit système comprenant un dispositif de commande (3) selon la revendication 10.

12. Véhicule automobile (1) comprenant un système d'aide à la conduite (2) selon la revendication 11.
